(19) Europäisches Patentamt
European Patent Office
Office européen des brevets

(11) **EP 3 919 834 B1**

(12) **EUROPEAN PATENT SPECIFICATION**

(45) Date of publication and mention
of the grant of the patent:
**16.11.2022 Bulletin 2022/46**

(21) Application number: **19913117.8**

(22) Date of filing: **30.01.2019**

(51) International Patent Classification (IPC):
*F24F 11/86* (2018.01)    *F25B 13/00* (2006.01)
*F24F 110/10* (2018.01)    *F25B 49/02* (2006.01)

(52) Cooperative Patent Classification (CPC):
**F24F 1/0003; F24F 11/86; F25B 49/022;**
F24F 2110/10; F24F 2140/50; F25B 13/00;
F25B 2313/0233; F25B 2600/0253;
F25B 2700/2104; F25B 2700/2117; Y02B 30/70

(86) International application number:
**PCT/JP2019/003118**

(87) International publication number:
**WO 2020/157851 (06.08.2020 Gazette 2020/32)**

(54) **AIR CONDITIONING DEVICE**

KLIMATISIERUNGSVORRICHTUNG

DISPOSITIF DE CLIMATISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.12.2021 Bulletin 2021/49**

(73) Proprietor: **Mitsubishi Electric Corporation**
**Tokyo 100-8310 (JP)**

(72) Inventors:
• **SHINODA, Ippei**
  **Tokyo 100-8310 (JP)**

• **KAWAI, Kazuhiko**
  **Tokyo 100-8310 (JP)**

(74) Representative: **Witte, Weller & Partner**
**Patentanwälte mbB**
**Postfach 10 54 62**
**70047 Stuttgart (DE)**

(56) References cited:
**JP-A- H01 193 563        JP-A- H05 240 519**
**JP-A- 2017 180 901        US-A- 6 044 652**
**US-A1- 2004 079 097**

EP 3 919 834 B1

**Description**

Technical Field

The present disclosure relates to an air-conditioning apparatus in which a plurality of indoor units is connected to one system.

Background Art

In general, air-conditioning apparatuses each having a plurality of indoor units connected to one system are known. In such an air-conditioning apparatus, the capacity of a compressor is controlled so that the evaporating temperature of a heat exchanger becomes constant. When the air-conditioning apparatus controls in this way, the compressor does not depart from its operation range.

In an air-conditioning apparatus of Patent Literature 1, for example, a required capacity of each utilization unit is acquired, a target value of the evaporating temperature in a utilization-side heat exchanger adjusted by a compressor and a target value of a refrigerant state adjusted by a pressure reducing device are set based on the highest required capacity, and the compressor and the pressure reducing device are controlled to achieve the target values. When a refrigerant temperature becomes lower than a target refrigerant temperature by a predetermined value or more in one utilization unit other than the utilization unit having the highest required capacity, the target value of the refrigerant state is changed so that a cooling capacity of the one utilization unit is lowered. The required capacity of each utilization unit is calculated based on a differential temperature that is acquired by subtracting a target blow-out temperature preset in the utilization unit from an actual blow-out temperature. The larger the differential temperature is, the larger the required capacity is.

Patent Literature 2 discloses an air conditioner comprising several indoor units and a controller configured to control the compressor frequency, wherein for each indoor unit the temperature difference between a target value and a measured value is determined. Subsequently, a capacity value of each indoor unit is determined based on said temperature difference and the rated capacity of the indoor unit. Finally, the frequency is determined as a function of the sum of all capacity values.

Citation List

Patent Literature

    Patent Literature 1: Japanese Unexamined Patent Application Publication No. 2018-138841
    Patent Literature 2: US6044652A

Summary of Invention

Technical Problem

In the air-conditioning apparatus of Patent Literature 1, to keep the evaporating temperature of the heat exchanger constant, the capacity of the compressor is controlled based on only the highest required capacity of the required capacities acquired from utilization units, and not based on the other required capacities. Consequently, in an environment, such as a server room, where a load varies intensively, this air-conditioning apparatus cannot follow the change of the load and may have an insufficient responsiveness to a set temperature. For this reason, to use such an air-conditioning apparatus in an environment where a load varies intensively, each indoor unit needs a dedicated outdoor unit and the capacity of the compressor is controlled directly relative to the load, according to the suction temperature or the blow-out temperature of the indoor unit.

The present invention has been made to solve the above problems, and an object of the present disclosure is to provide an air-conditioning apparatus, in which a plurality of indoor units is connected to one system, which is capable of following change of a load even in an environment where the load varies intensively and has an improved responsiveness to a set temperature.

Solution to Problem

An air-conditioning apparatus according to an embodiment of the present invention is defined in independent claim 1 and has an outdoor unit and a plurality of indoor units connected to the outdoor unit via a refrigerant pipe. The air-conditioning apparatus includes a compressor, a temperature detection unit installed in each of the indoor units and configured to detect a blow-out temperature or a suction temperature of the indoor unit, and a controller configured to control operations of the outdoor unit and the indoor units. The controller compares a detected value detected by the temperature detection unit of each of the indoor units with the set temperature being set in the indoor unit to acquire a required capacity of the indoor unit and acquires required capacities from all of the indoor units, and then controls the capacity of the compressor at a frequency based on a value calculated based on the acquired required capacities.

Advantageous Effects of Invention

The air-conditioning apparatus according to an embodiment of the present disclosure acquires required capacities, which are acquired by comparing detected values detected by the temperature detection units with the set temperatures, from all of the indoor units, and controls the capacity of the compressor at the frequency based on the value calculated based on the acquired required capacities. Consequently, even when a plurality of indoor units are connected to one system and even in an environment where a load varies intensively, the air-conditioning apparatus according to an embodiment of the present disclosure can follow the change of the load and thereby the responsiveness to a set temperature can be improved.

Brief Description of Drawings

[Fig. 1] Fig. 1 is a schematic diagram of a refrigerant circuit of an air-conditioning apparatus according to Embodiment 1 of the present invention.

[Fig. 2] Fig. 2 shows a flowchart explaining a control operation of a compressor in the air-conditioning apparatus according to Embodiment 1 of the present invention.

[Fig. 3] Fig. 3 is a schematic diagram of a refrigerant circuit of an air-conditioning apparatus according to Embodiment 4 of the present invention.

Description of Embodiments

Embodiments of the present invention will be described below with reference to the drawings. Note that in the drawings, the same or equivalent components are denoted by the same reference signs and the explanation therefor will be omitted or simplified. In addition, in the drawings, the shapes, sizes, and arrangements of the components may be modified as appropriate within the scope of the present invention as defined in the appended claims.

Embodiment 1

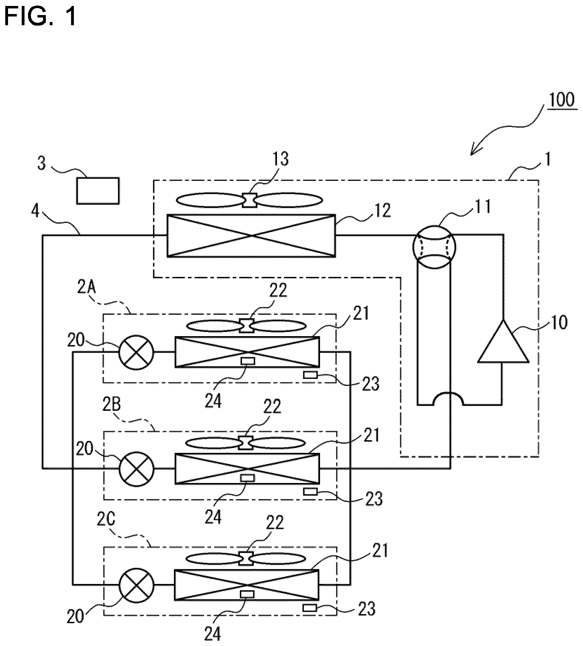

First, an entire structure of an air-conditioning apparatus according to Embodiment 1 will be explained based on Fig. 1. Fig. 1 is a schematic diagram of a refrigerant circuit of an air-conditioning apparatus according to Embodiment 1 of the present invention.

As shown in Fig. 1, an air-conditioning apparatus 100 of Embodiment 1 includes one outdoor unit 1, three indoor units (2A, 2B, 2C) that are in the same system and connected to the outdoor unit 1 via a refrigerant pipe 4, and a controller 3 that is configured to control operations of the outdoor unit 1 and the indoor units (2A, 2B, 2C). Note that, although Fig. 1 shows, as an example, the air-conditioning apparatus 100 of Embodiment 1 having three indoor units (2A, 2B, 2C), the air-conditioning apparatus 100 may have at least two indoor units.

The outdoor unit 1 includes a compressor 10, a flow switching unit 11, an outdoor-side heat exchanger 12, and an outdoor-side fan 13. Each of the indoor units (2A, 2B, 2C) includes an expansion mechanism 20, an indoor-side heat exchanger 21, and an indoor-side fan 22. The compressor 10, the flow switching unit 11, the outdoor-side heat exchanger 12, the expansion mechanism 20, and the indoor-side heat exchanger 21 are successively connected by a refrigerant pipe 4 to form a refrigerant circuit of the air-conditioning apparatus 100.

The compressor 10 is configured to suck and compress refrigerant, and discharge the refrigerant in a high-temperature and high-pressure state. The compressor 10 is, for example, a positive displacement compressor whose operation capacity is variable and which is driven by a motor controlled by an inverter.

The flow switching unit 11 is a four-way valve, for example, and has a function of switching flow passages of refrigerant. In a cooling operation, the flow switching unit 11 switches flow passages to connect a refrigerant discharge side of the compressor 10 and a gas side of the outdoor-side heat exchanger 12 as well as connect a refrigerant suction side of the compressor 10 and a gas side of the indoor-side heat exchanger 21. Meanwhile, in a heating operation, the flow switching unit 11 switches flow passages to connect the refrigerant discharge side of the compressor 10 and the gas side of the indoor-side heat exchanger 21 as well as connect the refrigerant suction side of the compressor 10 and the gas side of the outdoor-side heat exchanger 12.

The outdoor-side heat exchanger 12 is configured to function as a condenser and cause heat exchange to be performed between refrigerant discharged from the compressor 10 and air in a cooling operation. In addition, the outdoor-side heat exchanger 12 is configured to function as an evaporator and causes heat exchange to be performed between refrigerant flowing out from the expansion mechanism 20 and air in a heating operation. By using the outdoor-side fan 13, the outdoor-side heat exchanger 12 sucks an outdoor air and discharges an air that has exchanged heat with refrigerant outdoors.

The expansion mechanism 20 is configured to decompress and expand refrigerant flowing in the refrigerant circuit and is, for example, an electronic expansion valve whose opening degree is variably controlled.

The indoor-side heat exchanger 21 is configured to function as an evaporator and cause heat exchange to be performed between refrigerant flowing out from the expansion mechanism 20 and air in a cooling operation. The indoor-side heat exchanger 21 is configured to function as a condenser and cause heat exchange to be performed between refrigerant discharged from the compressor 10 and air in a heating operation. By using the indoor-side fan 22, the indoor-side heat exchanger 21 sucks an indoor air and supplies an air that has exchanged heat with refrigerant to the inside of a room.

Furthermore, each of the indoor units (2A, 2B, 2C) is provided with a temperature detection unit 23 that detects a blow-out temperature or a suction temperature and an evaporating temperature detection unit 24 that detects an evaporating temperature of the indoor-side heat exchanger 21. The temperature detection unit 23 and the evaporating temperature detection unit 24 are formed of thermistors or similar devices, for example.

The controller 3 is an arithmetic device, such as a microcomputer or a central processing unit (CPU), and software to be executed on the arithmetic device. Note that the controller 3 may be hardware, such as a circuit device, which achieves its function.

Next, operation of the air-conditioning apparatus 100 in a cooling operation will be explained. Refrigerant in a high-temperature and high-pressure gas state discharged from the compressor 10 flows through the flow switching unit 11 into the outdoor-side heat exchanger 12. In the outdoor-side heat exchanger 12, the refrigerant exchanges heat with air and is thus condensed and liquefied. The refrigerant in a condensed and liquefied state is decompressed by the expansion mechanism 20 into a low-pressure, two-phase gas-liquid state, and flows into the indoor-side heat exchanger 21. In the indoor-side heat exchanger 21, the refrigerant exchanges heat with air and thus the state of the refrigerant changes to a gas state. The refrigerant in a gas state flows through the flow switching unit 11 and is sucked into the compressor 10. During this operation, the outdoor-side fan 13 and the indoor-side fan 22 send air to the respective heat exchangers. The air sent by the indoor-side fan 22 is cooled and blown into a room, thereby cooling the room.

Next, operation of the air-conditioning apparatus 100 in a heating operation will be explained. The refrigerant in a high-temperature and high-pressure gas state discharged from the compressor 10 flows through the flow switching unit 11 into the indoor-side heat exchanger 21. In the indoor-side heat exchanger 21, the refrigerant exchanges heat with air and is thus condensed and liquefied. The refrigerant in a condensed and liquefied state is decompressed by the expansion mechanism 20 into a low-pressure, two-phase gas-liquid state, and flows into the outdoor-side heat exchanger 12. In the outdoor-side heat exchanger 12, the refrigerant exchanges heat with air and thus the state of the refrigerant changes to a gas state. The refrigerant in a gas state flows through the flow switching unit 11 and is sucked into the compressor 10. During this operation, the outdoor-side fan 13 and the indoor-side fan 22 send air to the respective heat exchangers. The air sent by the indoor-side fan 22 is heated and blown into a room, thereby heating the room.

Here, the controller 3 of Embodiment 1 acquires required capacities, which are acquired by comparing detected values detected by the temperature detection units 23 with the set temperatures, from all of the indoor units (2A, 2B, 2C), and controls the capacity of the compressor 10 at a frequency based on a value calculated based on the acquired required capacities.

Specifically, based on a detected value detected by each temperature detection unit 23, the controller 3 determines whether the corresponding indoor unit (2A, 2B, 2C) has a required capacity of "capacity UP", "capacity DOWN", or "NO-SIGNAL". For example, when a blow-out temperature or a suction temperature detected by one temperature detection unit 23 is higher than the set temperature of the corresponding indoor unit (2A, 2B, 2C) by more than one degree Celsius (C), the controller 3 determines that the indoor unit has a required capacity of "capacity UP", and when the blow-out temperature or the suction temperature is lower than the set temperature by more than one degree C, the controller 3 determines that the indoor unit has a required capacity of "capacity DOWN". When the blow-out temperature or the suction temperature detected by the temperature detection unit 23 is within plus or minus one degree C of the set temperature, the controller 3 determines that the indoor unit has a required capacity of "NO-SIGNAL". Note that the temperature differences described above are used as an example for clear explanation and are not limited to the above values.

At intervals of 60 seconds, the controller 3 acquires the capacities of all of the indoor units (2A, 2B, 2C), and determines whether each indoor unit (2A, 2B, 2C) has a required capacity of "capacity UP", "capacity DOWN", or "NO-SIGNAL" to acquire the required capacities. Then, a sum capacity of all of the indoor units (2A, 2B, 2C) is calculated with the "capacity UP" as a positive sign (+), the "capacity DOWN" as a negative sign (-), and the "NO-SIGNAL" as a plus or minus zero value ($\pm 0$). Suppose that the indoor unit 2A has a capacity of 10 kW, the indoor unit 2B has a capacity of 16 kW, and the indoor unit 2C has a capacity of 28 kW, for example, in the air-conditioning apparatus 100 shown in Fig. 1. When the indoor unit 2A has a required capacity of "capacity DOWN", the indoor unit 2B has a required capacity of "NO-SIGNAL", and the indoor unit 2C has a required capacity of "capacity UP", the sum capacity of all of the indoor units (2A, 2B, 2C) is represented as -10 kW + 0 kW + 28 kW = +18 kW. Because the sum capacity of the indoor units (2A, 2B, 2C) has a positive value (+), the controller 3 determines that the capacity is insufficient. Then, the controller 3 adds a predetermined frequency based on the sum capacity to the current frequency of the compressor 10 and outputs the resulting frequency to the compressor 10 as a new frequency. Note that the predetermined frequency is an increase/decrease amount (Hz) of the frequency corresponding to an increase/decrease amount X (%) of the capacity. The capacity increase/decrease amount X (%) can be changed in a range of about 1 (%) to 20 (%) of the rated capacity ratio, for example, by user setting. When the capacity of the compressor 10 is increased or decreased over about 20 (%) of the rated capacity ratio in a single control performed for the compressor 10, the capacity change is too quick to the compressor 10 and the refrigerant circuit, and may cause an abnormal operation. Thus, the increase/decrease amount to be changed in the capacity of the compressor 10, that is, the increase/decrease of the frequency is limited in a single control performed for the compressor 10.

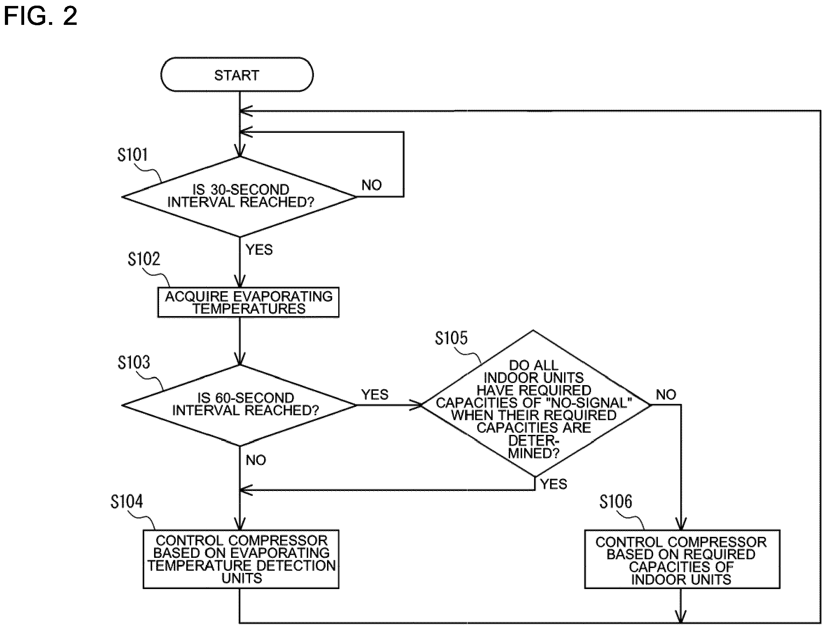

Next, a control operation of the compressor 10 in the air-conditioning apparatus 100 of Embodiment 1 will be explained based on the flowchart shown in Fig. 2. Fig. 2 shows the flowchart explaining a control operation of the compressor in the air-conditioning apparatus according to Embodiment 1 of the present invention.

The controller 3 performs a capacity control of the compressor 10 based on the evaporating temperature at intervals of 30 seconds. The controller 3 also performs a capacity control of the compressor 10 based on the above-mentioned required capacities at intervals of 60 seconds.

First, in step S101, the controller 3 determines whether or not a 30-second interval is reached. When the controller 3 determines that a 30-second interval is reached, the process proceeds to step S102 and the controller 3 acquires evaporating temperatures detected by the evaporating temperature detection units 24. Meanwhile, when the controller 3 determines that a 30-second interval is not reached, the controller 3 repeats the process of step S101.

Next, in step S103, the controller 3 determines whether or not a 60-second interval is reached. When the controller 3 determines that a 60-second interval is not reached, the process proceeds to step S104 and the controller 3 controls the capacity of the compressor 10 so that the value detected by the evaporating temperature detection unit 24 of each indoor unit (2A, 2B, 2C) reaches a target evaporating temperature. Meanwhile, when the controller 3 determines that a 60-second interval is reached, the process proceeds to step S105 and the controller 3 determines whether each of the indoor units (2A, 2B, 2C) has a required capacity of "capacity UP", "capacity DOWN", or "NO-SIGNAL". When, in step S105, the controller 3 determines that all of the indoor units (2A, 2B, 2C) have required capacities of "NO-SIGNAL", the process proceeds to step S104 and the controller 3 controls the capacity of the compressor 10 based on the evaporating temperatures detected by the evaporating temperature detection units 24.

When, in step S105, at least one of the indoor units (2A, 2B, 2C) has a required capacity of "capacity UP" or "capacity DOWN", the process proceeds to step S106 and the controller 3 controls the capacity of the compressor 10 at a frequency based on the value calculated based on the acquired required capacity, and then the process returns to step S101, again.

That is, in the air-conditioning apparatus 100 of Embodiment 1, the capacity of the compressor 10 is controlled based on the evaporating temperatures at intervals of 30 seconds and is controlled also based on the required capacities of the indoor units (2A, 2B, 2C) at intervals of 60 seconds. Timing of controlling the capacity of the compressor 10 based on the evaporating temperatures and timing of controlling the capacity of the compressor 10 based on the required capacities may coincide with each other because their base points are the same. In such a case, the required capacities of the indoor units (2A, 2B, 2C) are used preferentially. Furthermore, because the capacity control using the required capacities of the indoor units (2A, 2B, 2C) is performed at intervals of 60 seconds, the capacity control of the compressor 10 based on the evaporating temperatures is performed once in two times.

As described above, the air-conditioning apparatus 100 of Embodiment 1 includes the outdoor unit 1 and the plurality of indoor units (2A, 2B, 2C), each being connected to the outdoor unit 1 via the refrigerant pipe 4. In addition, the air-conditioning apparatus 100 includes the compressor 10, the temperature detection units 23, each detecting the blow-out temperature or the suction temperature of the corresponding indoor unit (2A, 2B, 2C), and the controller 3 that controls operations of the outdoor unit 1 and the indoor units (2A, 2B, 2C). The controller 3 acquires required capacities, each of which is acquired by comparing a detected value detected by each temperature detection unit 23 with the corresponding set temperature, from all of the indoor units (2A, 2B, 2C), and controls the capacity of the compressor 10 at a frequency based on a value calculated based on the acquired required capacities.

Specifically, the controller 3 compares a detected value detected by each temperature detection unit 23 with the set temperature of the corresponding indoor unit (2A, 2B, 2C), determines that the indoor unit (2A, 2B, 2C) has a required capacity of "capacity UP" when the difference between the detected value and the set temperature is larger than a first target value, which is a positive value, that the indoor unit (2A, 2B, 2C) has a required capacity of "capacity DOWN" when the difference is less than a second target value, which is a negative value, and that the indoor unit (2A, 2B, 2C) has a required capacity of "NO-SIGNAL" when the difference is within a range between the first and second target values, inclusive, to acquire required capacities. The controller 3 calculates the sum capacity of the indoor units (2A, 2B, 2C) with the "capacity UP" as a positive sign and the "capacity DOWN" as a negative sign. When the sum capacity is a positive value, the controller 3 determines that the capacity is insufficient and controls the capacity of the compressor 10 at such a frequency that compensates for the insufficiency.

That is, in the air-conditioning apparatus 100 of Embodiment 1, required capacities are acquired from all of the indoor units (2A, 2B, 2C) based on the detected values detected by the temperature detection units 23 and the capacity of the compressor 10 is controlled at a frequency based on a value calculated based on the acquired required capacities. Consequently, even when more than one indoor unit (2A, 2B, 2C) is connected to the same system and even in an environment where a load varies intensively, the air-conditioning apparatus 100 of Embodiment 1 is capable of following the change of the load and has an improved responsiveness to the set temperatures.

Embodiment 2

Next, an air-conditioning apparatus 100 according to Embodiment 2 will be explained with reference to Figs. 1 and 2. Note that a description of features identical to those of the air-conditioning apparatus 100 explained in Embodiment 1 will be omitted as appropriate.

In the air-conditioning apparatus 100 of Embodiment 2, when the controller 3 calculates the sum capacity of the indoor units (2A, 2B, 2C) by using the "capacity UP" as a positive sign, the "capacity DOWN" as a negative sign, and the "NO-SIGNAL" as zero, a temperature difference between a detected value detected by the corresponding temperature detection unit 23 and the corresponding set temperature is acquired for each indoor unit (2A, 2B, 2C). The controller 3 multiplies the capacity of each indoor unit (2A, 2B, 2C) by the corresponding temperature difference and adds all of the acquired values of the indoor units (2A, 2B, 2C) to calculate a sum capacity. When the sum capacity is a positive value, the controller 3 determines that the capacity is insufficient and controls the capacity of the compressor 10 at such a frequency that compensates for the insufficiency.

Specifically, at intervals of 60 seconds, the controller 3 acquires the capacities of all of the indoor units (2A, 2B, 2C) and determines whether each of the indoor units (2A, 2B, 2C) has a required capacity of "capacity UP", "capacity DOWN", or "NO-SIGNAL" to acquire required capacities. Then, the controller 3 determines how many degrees difference is there between the temperature detected by each temperature detection unit 23 and the corresponding set temperature. Presuming that the indoor unit 2A has a capacity of 10 kW, the indoor unit 2B has a capacity of 16 kW, and the indoor unit 2C has a capacity of 28 kW, for example, in the air-conditioning apparatus 100 shown in Fig. 1. Then, assuming that the controller 3 determines that the indoor unit 2A has a required capacity of "NO-SIGNAL". In addition, assuming that the suction temperature of the indoor unit 2B is two degrees C higher than the set temperature of the indoor unit 2B and thus the controller 3 determines that the indoor unit 2B has a required capacity of "capacity UP" with a temperature difference of two degrees C. Further, presuming that the suction temperature of the indoor unit 2C is one degree C lower than the set temperature of the indoor unit 2C and thus the controller 3 determines that the indoor unit 2C has a required capacity of "capacity DOWN" with a temperature difference of one degree C. In this case, the controller 3 calculates a sum capacity as 0 kW + (16 kW × 2 degrees C) + (28 kW × -1 degree C) = +4 kW and, because the sum capacity of the indoor units (2A, 2B, 2C) has a positive value (+), the controller 3 determines that the capacity is insufficient and compensation therefor is required. Then, the controller 3 adds a predetermined frequency based on the sum capacity to the current frequency of the compressor 10 and outputs the resulting frequency to the compressor 10 as a new frequency. With such a determination, the capacity of the compressor 10 can be controlled more accurately.

Note that in the air-conditioning apparatus 100 of Embodiment 2, the above-mentioned control is performed in step S106 shown in Fig. 2.

Embodiment 3

Next, an air-conditioning apparatus 100 according to Embodiment 3 will be explained with reference to Figs. 1 and 2. Note that a description of features identical to those of the air-conditioning apparatus 100 explained in Embodiment 1 will be omitted as appropriate.

In addition to the configuration of the air-conditioning apparatus 100 explained in Embodiments 1 and 2 described above, the air-conditioning apparatus 100 of Embodiment 3 has a configuration in which the controller 3 calculates an

excess/deficiency capacity ∆Qn from a temperature difference between the set temperature of each indoor unit (2A, 2B, 2C) and a temperature detected by the corresponding temperature detection unit 23, and increases (UP) or decreases (DOWN) the frequency of the compressor 10 to eliminate the excess/deficiency capacity ∆Qn. The excess/deficiency capacity ∆Qn is acquired by using the following formula:

$$\text{Excess/deficiency capacity } \Delta Qn = Cpa \times \text{air volume/ (specific capacity)} \times \{\text{suction temperature (blow-out temperature) - set temperature}\},$$

wherein

Cpa represents a specific capacity (calculated on the presumption that the humidity is 60%), and
∆Qn represents an excess/deficiency capacity of each indoor unit (n: indoor unit number).

The controller 3 adds the excess/deficiency capacities ∆Qn to the sum capacity , which is calculated in Embodiment 1 or 2 based on the required capacities of all of the indoor units (2A, 2B, 2C), and controls the capacity of the compressor 10 at such a frequency that compensates for the capacity insufficiency. With the excess/deficiency capacity ∆Qn calculated in this way, the capacity of the compressor 10 can be controlled more accurately.

Note that in the air-conditioning apparatus 100 of Embodiment 3, the above-mentioned control is performed in step S106 shown in Fig. 2.

Embodiment 4

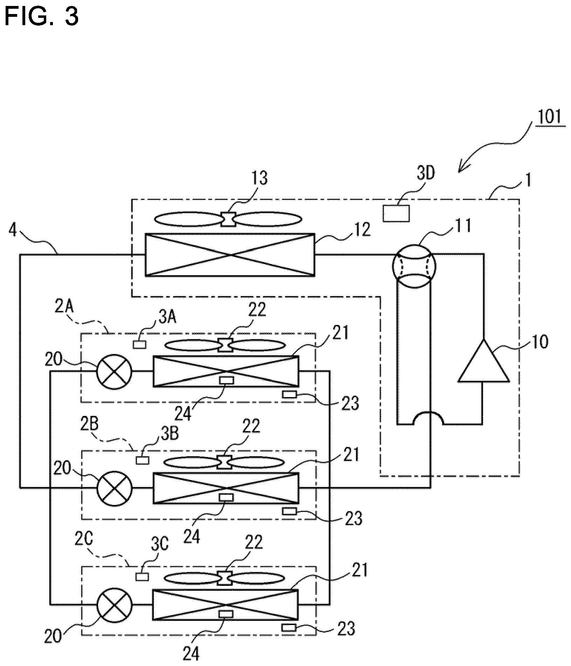

Next, an air-conditioning apparatus 101 according to Embodiment 4 will be explained with reference to Fig. 3. Fig. 3 is a schematic diagram of a refrigerant circuit of an air-conditioning apparatus according to Embodiment 4 of the present invention.

Note that a description of features identical to those of the air-conditioning apparatus 100 explained in Embodiments 1 to 3 will be omitted as appropriate.

As shown in Fig. 3, in the air-conditioning apparatus 101 of Embodiment 4, the controller 3 comprises first control units (3A, 3B, 3C) provided at the indoor units (2A, 2B, 2C), respectively, and a second control unit 3D provided at the outdoor unit 1. In the air-conditioning apparatus 101 of Embodiment 4, each of the first control units (3A, 3B, 3C) transmits a required capacity, which is acquired based on a detected value detected by the corresponding temperature detection unit 23, to the second control unit 3D. The second control unit 3D controls the compressor 10 at a frequency based on a value calculated based on the required capacities received from the first control units (3A, 3B, 3C). With such a configuration, the first control units (3A, 3B, 3C) transmit signals to the second control unit 3D at the respective timing points and, when the second control unit 3D receives a signal from one of the first control units (3A, 3B, 3C), the second control unit 3D can increase or decrease the frequency of the compressor 10. That is, in the air-conditioning apparatus 101 of Embodiment 4, communication traffic can be reduced compared with the air-conditioning apparatuses 100 of Embodiments 1 to 3.

Note that although the second control unit 3D controls the capacity of the compressor 10 based on the evaporating temperatures at intervals of 30 seconds, as shown in Fig. 2, the base point of the capacity control performed at the intervals of 30 seconds is defined at a timing point at which a signal is received from one of the first control units (3A, 3B, 3C) and the subsequent capacity controls are performed at intervals of 30 seconds from the base point to maintain the evaporating temperatures. This prevents the second control unit 3D from performing the capacity control of the compressor 10 based on the evaporating temperatures immediately after the one of the first control units (3A, 3B, 3C) transmits a required capacity. This is because the capacity control performed by the second control unit 3D, which is not able to directly confirm the loads of the indoor units (2A, 2B, 2C), may not match the capacity required by the one of the first control units (3A, 3B, 3C), and the capacity that does not match the required capacity is prevented from being output immediately after the required capacity is transmitted.

In addition, because frequent changes in the frequency of the compressor 10 may cause a burden on the compressor 10, the second control unit 3D does not receive required capacities from the first control units (3A, 3B, 3C) for 60 seconds after the second control unit 3D receives a required capacity from one of the first control units (3A, 3B, 3C) and outputs the corresponding frequency to the compressor 10.

Furthermore, in the air-conditioning apparatus 101 of Embodiment 4, signals may be transmitted from the first control units (3A, 3B, 3C) to the second control unit 3D at different timing points. For this reason, the second control unit 3D has a waiting time of 60 seconds and controls the capacity of the compressor 10 at a frequency based on a value acquired based on the signals transmitted from the first control units (3A, 3B, 3C) during the waiting time. The frequency based on a value acquired based on the signals is a frequency based on a value calculated based on the required capacities that are calculated based on the detected values detected by the temperature detection units 23 and acquired from all of the indoor units (2A, 2B, 2C), as explained in Embodiments 1 to 3.

Note that any one of the first control units (3A, 3B, 3C) provided at the indoor units (2A, 2B, 2C), respectively, may be used as a master unit and the master unit may be communicated with the second control unit 3D. In this case, the first control units (3A, 3B, 3C) communicate with each other and calculation is executed based on the required capacities acquired by the master unit.

The present invention is defined by the appended claims and is explained above based on the embodiments, but the configuration of the present invention is not limited to the configurations of the embodiments described above. For example, the air-conditioning apparatus 100 is not limited to the one described above and may include other elements. To be more specific, the four-way valve may be omitted in the air-conditioning apparatus 100 and only a cooling operation or a heating operation may be performed.

Reference Signs List

1 outdoor unit 2A, 2B, 2C indoor units 3 controller 3A, 3B, 3C first control units 3D second control unit 4 refrigerant pipe 10 compressor 11 flow switching unit 12 outdoor-side heat exchanger 13 outdoor-side fan 20 expansion mechanism 21 indoor-side heat exchanger 22 indoor-side fan 23 temperature detection unit 24 evaporating temperature detection unit 100, 101 air-conditioning apparatuses

**Claims**

1. An air-conditioning apparatus (100, 101) having an outdoor unit (1) and a plurality of indoor units (2A, 2B, 2C) connected to the outdoor unit (1) via a refrigerant pipe (4), the air-conditioning apparatus (100, 101) comprising:

   a compressor (10);
   a temperature detection unit (23) installed in each of the indoor units (2A, 2B, 2C) and configured to detect a blow-out temperature or a suction temperature of the indoor unit (2A, 2B, 2C); and
   a controller (3) configured to control operations of the outdoor unit (1) and the indoor units (2A, 2B, 2C), wherein the controller (3) is configured to acquire a required capacity by comparing a detected value detected by the temperature detection unit (23) of each of the indoor units (2A, 2B, 2C) with a set temperature of the indoor unit, and determining that the indoor unit has a required capacity of "capacity UP" when a difference acquired by subtracting the set temperature from the detected value is higher than a first target value that is a positive value, that the indoor unit has a required capacity of "capacity DOWN" when the difference is less than a second target value that is a negative value, and that the indoor unit has a required capacity of "NO-SIGNAL" when the difference is within a range between the first and second target values, inclusive, and
   calculate a sum capacity of all of the indoor units (2A, 2B, 2C) with the "capacity UP" as a positive sign, the "capacity DOWN" as a negative sign, and the "NO-SIGNAL" as zero,
   determine that the capacity is insufficient when the sum capacity has a positive value, and
   control the capacity of the compressor at a frequency such that the insufficiency is compensated.

2. The air-conditioning apparatus (100, 101) of claim 1,

   wherein, when calculating the sum capacity of the indoor units (2A, 2B, 2C) with the "capacity UP" as a positive sign, the "capacity DOWN" as a negative sign, and the "NO-SIGNAL" as zero, the controller (3) is configured to acquire a temperature difference between a detected value detected by the temperature detection unit (23) and the set temperature for each of the indoor units (2A, 2B, 2C),
   calculate a value by multiplying the capacity of the indoor unit by the corresponding temperature difference for each of the indoor units (2A, 2B, 2C),
   calculate a sum of the values of all of the indoor units (2A, 2B, 2C),
   determine that the capacity is insufficient when the sum value has a positive value, and
   control the capacity of the compressor at a frequency such that the insufficiency is compensated.

3. The air-conditioning apparatus (100, 101) of claim 1 or 2,

   wherein the controller (3) is configured to calculate the sum capacity of all of the indoor units (2A, 2B, 2C) by, for each of the indoor units (2A, 2B, 2C),

acquiring a temperature difference between a detected value detected by the temperature detection unit (23) and the set temperature,
calculating an excess/deficiency capacity from the temperature difference, and
adding the excess/deficiency capacity to the capacity of the indoor unit.

4. The air-conditioning apparatus (100, 101) of claim 3,
wherein the controller (3) is configured to calculate the excess/deficiency capacity by using the following formula:

$$\text{Excess/deficiency capacity } \Delta Qn = Cpa \times \text{air volume/ (specific capacity)} \times$$

$$\{\text{detected value by temperature detection unit (23) - set temperature}\},$$

wherein Cpa represents a specific capacity (calculated on the assumption that a humidity is 60%).

5. The air-conditioning apparatus (100, 101) of any one of claims 1 to 4, wherein

the controller (3) comprises a first control unit (3A, 3B, 3C) provided at each of the indoor units (2A, 2B, 2C) and a second control unit (3D) provided at the outdoor unit (1),
the first control unit (3A, 3B, 3C) is configured to acquire a required capacity based on a detected value detected by the temperature detection unit (23) and transmit the required capacity to the second control unit (3D), and
the second control unit (3D) is configured to calculate a value based on the required capacity received from the first control unit (3A, 3B, 3C) and control the capacity of the compressor at a frequency based on the value.

**Patentansprüche**

1. Klimatisierungsvorrichtung (100, 101) mit einer Außeneinheit (1) und einer Vielzahl von Inneneinheiten (2A, 2B, 2C), die mit der Außeneinheit (1) über eine Kühlmittelleitung (4) verbunden sind, wobei die Klimatisierungsvorrichtung (100, 101) aufweist:

einen Kompressor (10);
eine Temperaturerfassungseinheit (23), die in jeder der Inneneinheiten (2A, 2B, 2C) installiert ist und die eingerichtet ist, eine Ausblastemperatur oder eine Ansaugtemperatur der Inneneinheit (2A, 2B, 2C) zu erfassen; und
eine Steuereinheit (3), die eingerichtet ist, Betriebsweisen der Außeneinheit (1) und der Inneneinheiten (2A, 2B, 2C) zu steuern, wobei
die Steuereinheit (3) eingerichtet ist, eine erforderliche Kapazität zu erlangen, indem ein erfasster Wert, der durch die Temperaturerfassungseinheit (23) von jeder der Inneneinheiten (2A, 2B, 2C) erfasst wird, mit einer eingestellten Temperatur der Inneneinheit verglichen wird und indem bestimmt wird, dass die Inneneinheit eine erforderliche Kapazität von "Kapazität UP" hat, wenn eine Differenz, die durch Subtrahieren der eingestellten Temperatur von dem erfassten Wert erlangt wird, höher als ein erster Zielwert ist, der einen positiven Wert darstellt, dass die Inneneinheit eine erforderliche Kapazität von "Kapazität DOWN" hat, wenn die Differenz kleiner als ein zweiter Zielwert ist, der einen negativen Wert darstellt, und dass die Inneneinheit eine erforderliche Kapazität von "NO-SIGNAL" hat, wenn die Differenz innerhalb eines Bereichs zwischen, inklusive, den ersten und zweiten Zielwerten liegt, und
eine Summenkapazität von allen Inneneinheiten (2A, 2B, 2C) mit der "Kapazität UP" als positives Vorzeichen, der "Kapazität DOWN" als negatives Vorzeichen und der "NO-SIGNAL als Null zu berechnen,
zu bestimmen, dass die Kapazität nicht ausreicht, wenn die Summenkapazität einen positiven Wert aufweist, und die Kapazität des Kompressors mit einer Frequenz zu steuern, so dass die Insuffizienz kompensiert wird.

2. Klimatisierungsvorrichtung (100, 101) nach Anspruch 1,

wobei, wenn die Summenkapazität der Inneneinheiten (2A, 2B, 2C) mit der "Kapazität UP" als positives Vorzeichen, der "Kapazität DOWN als negatives Vorzeichen und der "NO-SIGNAL" als Null berechnet wird, die Steuereinheit (3) eingerichtet ist,
eine Temperaturdifferenz zwischen einem erfassten Wert, der durch die Temperaturerfassungseinheit (23) erfasst wird, und der eingestellten Temperatur für jede der Inneneinheiten (2A, 2B, 2C) zu erlangen,
einen Wert zu berechnen, indem die Kapazität der Inneneinheit mit der entsprechenden Temperatur für jede der Inneneinheiten (2A, 2B, 2C) multipliziert wird,
eine Summe der Werte aller Inneneinheiten (2A, 2B, 2C) zu berechnen,
zu bestimmen, dass die Kapazität nicht ausreichend ist, wenn der Summenwert einen positiven Wert einnimmt, und
die Kapazität des Kompressors mit einer Frequenz zu steuern, so dass die Insuffizienz kompensiert wird.

**3.** Klimatisierungsvorrichtung (100, 101) nach Anspruch 1 oder 2,

wobei die Steuereinheit (3) eingerichtet ist, die Summenkapazität aller Inneneinheiten (2A, 2B, 2C) für jede der Inneneinheiten (2A, 2B, 2C) zu berechnen,
eine Temperaturdifferenz zwischen einem erfassten Wert, der durch die Temperaturerfassungseinheit (23) erfasst wird, und der eingestellten Temperatur zu erlangen,
eine Überschuss/Mangel-Kapazität aus der Temperaturdifferenz zu berechnen, und
die Überschuss/Mangel-Kapazität zur Kapazität der Inneneinheit zu addieren.

**4.** Klimatisierungsvorrichtung (100, 101) nach Anspruch 3,
wobei die Steuereinheit (3) eingerichtet ist, die Überschuss/Mangel-Kapazität unter Verwendung der folgenden Formel zu berechnen:

$$\text{Überschuss/Mangel-Kapazität } \Delta Qn = Cpa \times \text{Luftvolumen/ (spezifische Kapazität)} \times$$

$$\{\text{Wert erfasst durch Temperaturerfassungseinheit (23) - eingestellter Temperatur}\},$$

wobei Cpa eine spezifische Kapazität repräsentiert (berechnet unter der Annahme, dass eine Feuchtigkeit 60% beträgt).

**5.** Klimatisierungsvorrichtung (100, 101) nach einem der Ansprüche 1 bis 4, wobei

die Steuereinheit (3) eine erste Steuereinheit (3A, 3B, 3C), die bei jeder der Inneneinheiten (2A, 2B, 2C) vorgesehen ist, und eine zweite Steuereinheit (3D) aufweist, die bei der Außeneinheit (1) vorgesehen ist,
die erste Steuereinheit (3A, 3B, 3C) eingerichtet ist, eine erforderliche Kapazität basierend auf einem erfassten Wert, der durch die Temperaturerfassungseinheit (23) erfasst wird, zu erlangen und die erforderliche Kapazität an die zweite Steuereinheit (3D) zu senden, und
die zweite Steuereinheit (3D) eingerichtet ist, einen Wert basierend auf der erforderlichen Kapazität zu berechnen, die von der ersten Steuereinheit (3A, 3B, 3C) empfangen wird, und die Kapazität des Kompressors bei einer Frequenz basierend auf dem Wert zu steuern.

**Revendications**

**1.** Appareil de climatisation (100, 101) ayant une unité extérieure (1) et une pluralité d'unités intérieures (2A, 2B, 2C) reliées à l'unité extérieure (1) via un tuyau de réfrigérant (4), cet appareil de climatisation (100, 101) comprenant :

un compresseur (10)
une unité de détection de température (23) installée dans chacune des unités intérieures (2A, 2B, 2C) et configurée de façon à détecter une température de soufflage ou une température d'aspiration de l'unité intérieure (2A, 2B, 2C) ; et
un contrôleur (3) configuré de façon à commander les opérations de l'unité extérieure (1) et des unités intérieures (2A, 2B, 2C),
ce contrôleur (3) étant configuré de façon à acquérir une capacité requise en comparant une valeur détectée détectée par l'unité de détection de température (23) de chacune des unités intérieures (2A, 2B, 2C) avec une température de consigne de l'unité intérieure, et en déterminant que l'l'unité intérieure a une capacité requise de "capacity UP" lorsqu'une différence acquise en soustrayant la température de consigne de la valeur détectée est plus grande qu'une première valeur cible qui est une valeur positive, que l'unité intérieure a une capacité requise de of "capacity DOWN" lorsque la différence est moins qu'une deuxième valeur cible, et que l'unité intérieure a une capacité requise de "NO-SIGNAL" lorsque la différence est située dans une plage entre la première et la deuxième valeur cible, et de façon à

calculer une capacité totale des unités intérieures (2A, 2B, 2C) avec la "capacity UP" comme un signe positif, la "capacity DOWN" comme un signe négatif et le "NO-SIGNAL" comme zéro,

déterminer que la capacité est insuffisante lorsque la capacité totale a une valeur positive, et de façon à contrôler la capacité du compresseur à une fréquence telle que l'insuffisance est compensée.

2. Appareil de climatisation (100, 101) selon la revendication 1,

dans lequel, lors du calcul de la capacité totale des unités intérieures (2A, 2B, 2C) avec la "capacity UP" comme un signe positif, la "capacity DOWN" comme un signe négatif et le "NO-SIGNAL" comme zéro, le contrôleur (3) est configuré de façon à

acquérir une différence de température entre une valeur détectée détectée par l'unit de détection de température (23) et la température de consigne pour chacune des unités intérieures (2A, 2B, 2C),

calculer une valeur en multipliant la capacité de l'unité intérieure par la différence de température correspondante pour chacune des unités intérieures (2A, 2B, 2C),

calculer une somme des valeurs des toutes les unités intérieures (2A, 2B, 2C),

déterminer que la capacité est insuffisante lorsque la capacité totale a une valeur positive, et de façon à contrôler la capacité du compresseur à une fréquence telle que l'insuffisance est compensée.

3. Appareil de climatisation (100, 101) selon la revendication 1 ou 2,

dans lequel le contrôleur (3) est configuré de façon à calculer la capacité totale de toutes les unités intérieures (2A, 2B, 2C) en, pour chacune des unités intérieures (2A, 2B, 2C),

acquérant une différence de température entre une valeur détectée détectée par l'unité de détection de température (23) et la température de consigne,

en calculant la capacité excessive/insuffisante à partir de la différence de température, et en additionnant la capacité excessive/insuffisante à la capacité de l'l'unité intérieure.

4. Appareil de climatisation (100, 101) selon la revendication 3,
dans lequel le contrôleur (3) est configuré de façon à calculer la capacité excessive/insuffisante en utilisant la formule suivante :

$$\text{Capacité excessive/insuffisante } \Delta Qn = Cpa \times \text{volume d'air (capacité spécifique)} \times$$

$$\{\text{valeur détectée par l'unité de détection de température (23) – température de consigne}\},$$

Cpa représentant une capacité spécifique (calculée sur la supposition qu'une humidité est 60 %.)

5. Appareil de climatisation (100, 101) selon l'une quelconque des revendications 1 à 4, dans lequel

le contrôleur (3) comprend une première unité de commande (3A, 3B, 3C) prévue au niveau de chacune des unités intérieures (2A, 2B, 2C) et une deuxième unité de commande (3D) prévue au niveau de l'unité extérieure (1),

la première unité de commande (3A, 3B, 3C) est configurée de façon à acquérir une capacité requise en se basant sur une valeur détectée détectée par l'unité de détection de température (23) et à transmettre la capacité requise à la deuxième unité de commande (3D), et

la deuxième unité de commande (3D) est configurée de façon à calculer une valeur en se basant sur la capacité requise reçue de la première unité de commande (3A, 3B, 3C) et à contrôler la capacité du compresseur à une fréquence basée sur cette valeur.

FIG. 1

FIG. 2

```
                    ┌──────────────┐
                    │    START     │
                    └──────┬───────┘
                           │
                           ▼
         S101           ╱─────────╲
                      ╱  IS 30-SECOND ╲    NO
                     ╱  INTERVAL REACHED? ╲──────┐
                      ╲               ╱          │
                       ╲─────────────╱           │
                           │ YES                 │
                           ▼                      │
         S102      ┌──────────────────┐          │
                   │ ACQUIRE EVAPORATING │        │
                   │   TEMPERATURES     │         │
                   └────────┬─────────┘          │
                            │                     │
                            ▼                     │
         S103          ╱─────────╲        ╱─────────╲
                     ╱ IS 60-SECOND ╲ YES ╱  DO ALL  ╲  NO
                    ╱ INTERVAL REACHED?╲──╱ INDOOR UNITS ╲──┐
                     ╲               ╱    ╲ HAVE REQUIRED╱  │
                      ╲─────────────╱      ╲ CAPACITIES OF╱  │
                           │ NO            ╲ "NO-SIGNAL" ╱   │
                           │               ╲ WHEN THEIR  ╱   │
                           │                ╲ REQUIRED   ╱    │
                           │                 ╲ CAPACITIES╱     │
                           │                  ╲ ARE DETER╱      │
                           │                   ╲  MINED? ╱       │
                           │                    ╲───────╱        │
                           │                       │ YES         │
                           │◄──────────────────────┘             │
                           ▼                                     │
         S104   ┌──────────────────────┐      S106  ┌──────────────────────┐
                │ CONTROL COMPRESSOR    │            │ CONTROL COMPRESSOR    │
                │ BASED ON EVAPORATING  │            │ BASED ON REQUIRED     │
                │ TEMPERATURE DETECTION │            │ CAPACITIES OF         │
                │       UNITS           │            │    INDOOR UNITS       │
                └──────────┬───────────┘            └──────────┬───────────┘
                           │                                    │
```

EP 3 919 834 B1

FIG. 3

**EP 3 919 834 B1**

**REFERENCES CITED IN THE DESCRIPTION**

**Patent documents cited in the description**

- JP 2018138841 A

- US 6044652 A